# EUROPEAN PATENT APPLICATION

(11) **EP 1 832 893 A1**
(43) Date of publication of application: **12.09.2007**
(21) Application number: 07386002.5
(22) Date of filing: 06.02.2007
(51) Int. Cl.: G01S 5/14, G06Q 10/00

(54) **A system of data collection and processing for automated tracking, discovery and identification of assets, using wireless technology**

(30) Priority: 21.02.2006 GR 20060100114
(71) Applicant: Thyratron Electronic Applications Limited Liability Company, 25 008 Kydonies Farron Achaias (GR); Frigoglass Commercial Refrigeration S.A.I.C., 115 64 Kifissia, Attika (GR)
(72) Inventor: Serafimidis, Dimosthenis, 25 008 Kydonies Farron Achaias (GR)
(74) Representative: Masoulas, Athanasios V.

(57) **Abstract**

An electronic system for collecting and processing data regarding discovery and identification of assets like professional coolers and freezers, which consists of active transceivers that are automatically self-organized in a wireless network and are of three types:
(a) Asset Identification and Information Servers. They are attached to each asset and transmit the asset ID and dynamically changing status or setting data for the asset.
(b) Truck-based Information Collection Units. They are placed in vehicles which, as they pass through the communication range of asset servers, receive the asset data. They include GPS devices for geographical positioning.
(c) Portable Transceivers (also called: Wearable Information Collection Units). They are carried by service personnel and are used to provide access to the system for assets which do not have sufficient communication range.

## Description

The invention refers to an electronic system for collecting and processing data, in order to automatically track, discover and identify assets, based on wireless technology.

Data collection and processing systems have been used in asset identification, like e.g. in the tracking of beverage coolers, TV sets, vending machines, water coolers, printing stations etc.

Current methods for asset identification are based either on solely hand-written systems or on bar codes, which are read through hand-held scanners. In both cases, the need for a human operator, who has to visit each asset and collect the data, is inevitable. Those methods - especially the hand written one - cannot provide reliability and have significant operating cost. As a result, "missing" assets are a common situation, resulting -among others- in a significant accounting cost.

To automate asset tracking, two types of systems have been proposed and are being used:
(a) GSM/GPS systems, which attach a geographical positioning device and a mobile communication device to each asset. In regular time intervals, the position of the asset is transmitted through the mobile network to a base station where collection and processing of the data is performed. These systems have a high setup cost, but are also costly in operation, as they require connection to a mobile network for each asset. Furthermore, they are not suitable for places where the GPS system cannot access satellites (e.g. inside buildings).
(b) RF-tag systems, which attach an electronic wireless tag to each asset. This tag -when activated by a reading device- transmits the identity of the asset. The geographic location is taken from a GPS receiver attached to the reading device. Communication range of such tags is from a few centimetres to a few metres, and can therefore only be used when the reading device approaches each asset often. Another drawback of RF-tag based systems is that they can only transmit asset-ID and no dynamic data regarding the state of each asset.

The present invention allows the creation of a system for collecting and processing data for asset discovery, identification and tracking of low setup costs and minimal operating cost. Furthermore, it achieves high reliability. It can be used both indoors and outdoors and can be expanded or adapted for various conditions.

According to the invention, this is accomplished through a system of data collection and identification, which consists of active transceivers. These transceivers are self-organised in a wireless network and can be of three types:
(a) Asset Identification and Information Servers. They are attached to each asset and transmit identity and dynamic information.
(b) Truck-based Information Collection Units. They are attached on cars or tracks which collect asset information as they drive by the effective range of the asset transceivers. They are connected to a GPS device for geographical positioning.
(c) Wearable Information Collection Units. They are carried by service personnel and are used to provide access to the system for assets which have not sufficient range to reach the vehicle units.

The system for asset tracking that uses wireless technology, which is described in this invention, presents a number of advantages, as it solves many of the issues arising with existing implementations. Through double access to each asset -both from vehicle-based and wearable units- the reliability is highly enhanced. Data collection is much faster, as it does not rely on human operators. And finally, its low cost makes it suitable for applications with a large number of assets.

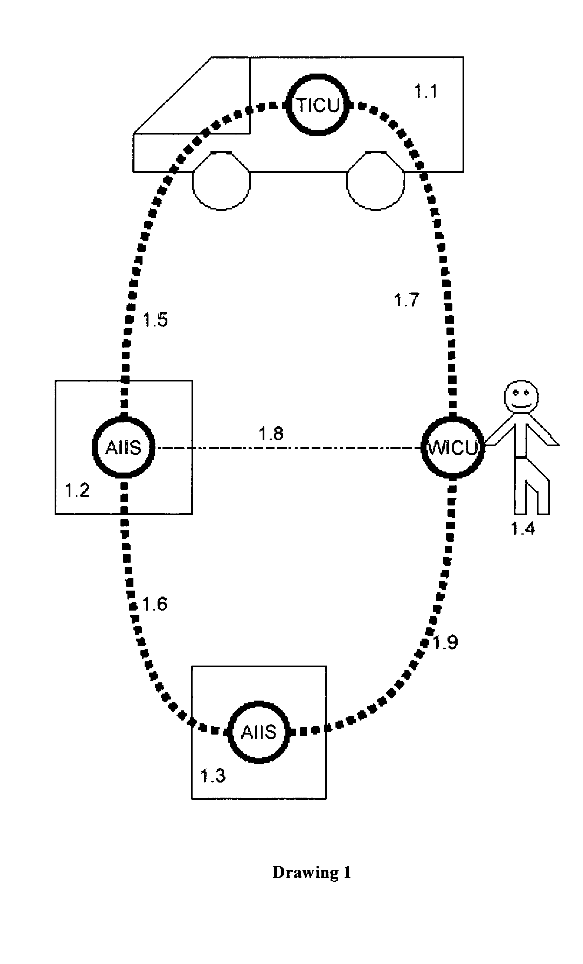

The invention is described in the following, through an example and based on the attached diagram 1. Diagram 1 presents a system for data collection and processing for automated tracking and identification of assets. The presented system is implemented through a track-based unit, a wearable unit and two information server units attached to two assets. All units communicate over an IEEE 802.15.4 compliant wireless protocol.

Data is collected by a vehicle (1.1), equipped with a track-based information-collection unit (TICU), which is within range of an asset identification server (AIIS) (1.2) and the range of a wearable information collection unit (1.4). The asset-based server (AIIS) (1.2) and the wearable unit (WICU) (1.4) receive signal from another asset server (1.3). The track-based unit (1.1) has therefore access to both asset servers as follows: Asset (1.2) is seen directly through the wireless link (1.5), indirectly through the wearable unit using links (1.7), (1.8) and also through the asset server (1.3) using links (1.7), (1.9), (1.6). The server (1.3) is seen through the server (1.2) using links (1.5), (1.6), through the wearable unit using (1.7) and (1.9) as well as through links (1.7), (1.8), (1.6).

## Claims

1. Electronic System for data collection and processing for automated discovery, tracking and identification of assets, using wireless technology. The system is **characterised by** its implementation via a wireless vehicle-based unit for tracking the assets in the market with reference to geographical position. The vehicle based unit cooperates with wireless unit on each asset for management of identity and related information and setting for the asset.

2. A system for collecting and processing data, as in claim 1, which is **characterised by** the capability to transfer any type of available information besides plain asset identity.

3. A system for collecting and processing data, as in claim 1, which is **characterised by** the fact that it cooperates with a portable unit which can be carried by a human operator.

4. A system for collecting and processing data, as in claims 1 and 3, which is **characterised by** the fact that the vehicle-based tracking unit with geographical positioning, the portable unit and the wireless unit which is placed on each asset and manages identity and other information, all communicate through an IEEE 802.15.4 compliant protocol.

5. A system for collecting and processing data, as in claims 1, 3 and 4, which is **characterised by** the fact that the vehicle-based tracking and geographical positioning unit, the portable unit and the wireless unit which is placed on each asset and manages identity and other information, all can automatically self-organize into a wireless network with each unit carrying information from all other units in the network.

6. A system for collecting and processing data, as in claims 1, 3 and 4, which is **characterised by** the fact that the units can automatically adjust the transmission power for lower energy consumption and optimisation in the accuracy of the geographical positioning of each asset.

7. A system for collecting and processing data, as in claims 1, 3 and 4, which is **characterised by** the fact that the unit of claim 1 can utilize network information coming from a network as in claim 5, in order to choose which asset information have maximum reliability and should therefore be retained for further processing.

8. A system for collecting and processing data, as in claims 1, 3 and 4, which is **characterised by** the fact that it is used in cases of discovery and tracking of assets like professional coolers and freezer, TV sets, automatic vending machines, water coolers, printing machines etc.
